# EUROPEAN PATENT SPECIFICATION

(11) **EP 1 759 135 B1**
(45) Date of publication and mention of the grant of the patent: **12.10.2011**
(21) Application number: 05752725.1
(22) Date of filing: 14.06.2005
(51) Int. Cl.: F16K 3/08

(54) **IN-LINE VALVE CARTRIDGE**
INLINE-VENTILPATRONE
CARTOUCHE DE VANNE EN LIGNE

(30) Priority: 23.06.2004 US 582336 P
(43) Date of publication of application: 07.03.2007
(73) Proprietor: Ideal Standard International BVBA, 1160 Brussels (BE)
(72) Inventor: SPONHEIMER, Jürgen, 54524 Klausen (DE); CHRIST, Frank, 54538 Bausendorf (DE); THOENNES, Theo, 54552 Darscheid (DE)
(74) Representative: Müller, Karl-Ernst
(86) International application number: PCT/EP2005/006347
(87) International publication number: WO 2006/000316

(56) References cited:
- EP-A- 0 453 287
- DE-A1- 2 945 834
- DE-B- 1 153 581
- GB-A- 2 213 912
- US-A1- 2003 196 712

## Description

### FTELD OF THE INVENTION

The present invention is directed to a valve cartridge for use in sanitary fittings. More particularly, the present invention is directed to a valve cartridge that imparts central flow through capabilities for single or mixed temperature applications. The present invention simultaneously permits integration of the disclosed valve in a plurality of sanitary fitting designs heretofore prohibited by conventional valve cartridge configurations.

### BACKGROUND OF THE INVENTION

Sanitary valves are well known in the bath and kitchen industry for the disbursement of water from faucets, showers, handsprays and other sanitary fittings. It is well known to arrange two valve disks adjacent one another in a cartridge casing wherein each disk incorporates one or more apertures to accommodate fluid flow therethrough. One disk remains stationary during operation of the valve with the second disk rotationally disposed relative thereto. A driving element such as a shaft or spindle moves the rotating disk to vary the relative position of the disks, thereby varying the alignment of the apertures and deriving water flow of a desired volume, temperature and pressure. A user discontinues water flow by moving the driving element so that the rotating disk can assume a position that obstructs the apertures of the stationary disk. The disks are desirably fabricated from a ceramic material as is well known in the art.

A valve cartridge in accordance with the features of the preamble of claim 1 is known from EP 0 453 287 A1. The stationary disk inserted into an inner chamber of the housing of the cartridge is seated on top of a lower gasket sealing located on the bottom of the chamber. The stationary disk is fixed in position against rotation by outwardly extending ears which extend into vertical grooves which are formed inside the sidewall of the housing.

It is desirable to provide a sanitary valve that achieves central flow through capabilities for single and mixed temperature applications. It is also desirable to provide a sanitary mixing valve that reduces material requirements for optimal sealing and water delivery and that imparts functional capabilities to the cartridge housing. Such a valve can be used in single temperature applications or alternatively used to complement the mixed temperature applications of sanitary mixing valves without altering the cartridge configuration.

### SUMMARY OF THE INVENTION

It is an advantage of the present invention to provide an in-line valve cartridge having inherent flow through capabilities for single and mixed temperature applications. In this configuration, the in-line valve cartridge of the present invention is successfully employed in a plurality of sanitary installations, including but not limited to kitchen and bath faucets, showers, bath fittings, handsprays and complementary devices.

It is another advantage of the present invention to provide an in-line valve cartridge that incorporates frictional fit of an inlet seal and a seal adjacent a stationary disk in the housing such that the relative frictional fit between the seal and the stationary disk to one another, in combination with the operation of stationary and rotating disks, achieves integration of the seals without welding and without the insertion of additional seals such as O-rings to impute pressure on the stationary disk. In this configuration, the inlet seal and stationary disk seal are functionally integral with the housing yet detachably inserted into complementary grooves in the housing for easy assembly and maintenance.

In accordance with these and other advantages, the present invention is directed to a valve cartridge for use in sanitary fittings. The valve cartridge of the present invention includes a generally cylindrical housing having a proximate extent for support within a housing of a sanitary fitting within which said cartridge is disposable, a distal extent from which water leaves said cartridge and a longitudinal body extending there between. The body has a thickness delineated by an outer peripheral surface and an inner peripheral surface, said inner peripheral surface further defining an elongated lumen within said body. The housing further includes an annular aperture that connects said outer and inner peripheral surfaces of said body and accommodates placement of a driving member therethrough whereas said driving member is rotating about a longitudinal axis of said housing and correspondingly achieving translational movement through said aperture. This aperture has opposing extents that operate as stops for said driving member and define open and closed positions of said valve cartridge. In addition, a rotating disk is rotationally disposed relative to a stationary disk wherein said stationary disk has at least one aperture for through flow of cold water, hot water or a combination thereof. Protrusions are depending outwardly from a portion of said inner peripheral surface adjacent said proximate extent so as to define proximate seats and distal seats therein. The valve cartridge includes an elastomeric inlet seal disposed in the proximate seats adjacent said proximate extent of said housing to facilitate mounting of said cartridge to a support surface and said stationary disk and said rotating disk are placed in tandem adjacent a second elastomeric seal that is frictionally secured by said distal seats such that said second seal and said distal seats together secure said stationary disk within said housing.

According to one embodiment of the invention the second seal includes at least one aperture therethrough corresponding to said apertures of said stationary disk.

The piston desirably includes at least one groove circumferentially defined therearound that accommodate placements of at least one corresponding O-ring therewithin. The piston may also include an aperture for securement of the driving member therewithin.

In the alternative, a centric spindle in communication with the driving member may be employed instead of a piston. Such centric spindle allows water to flow therearound and along the inner peripheral surface of the body for egress therefrom.

The in-line valve cartridge of the present invention reduces the complexity and material waste associated with conventional valve cartridge designs. This benefit inures to the simplicity of sanitary installations by enabling use of identical valves in multiple sanitary applications with varying aesthetic appearances. The present invention enhances the structural and aesthetic selection of sanitary designs by achieving designs heretofore incapable of use due to the constraints of conventional mixing valve design. The present invention performs this accomplishment and simultaneously permits easy installation, use and maintenance in both single and mixed temperature applications. This improved mixing valve therefore enables superior flow through water delivery in a simple configuration that has applications not only for faucets but also for bath and shower fittings and other water delivery applications.

### BRIEF DESCRIPTION OF THE DRAWINGS

Figure 1 is a perspective view of an in-live valve cartridge of the present invention.
Figure 2 is a top view of the in-line valve cartridge of Figure 1.
Figure 3 is a sectional view of the in-line valve cartridge along line A-A shown in Figure 2.
Figure 4 is a sectional view of the in-line valve cartridge along line B-B shown in Figure 3.
Figure 5 is an exploded view of the in-line valve cartridge of the present invention.

### DETAILED DESCRIPTION OF THE INVENTION

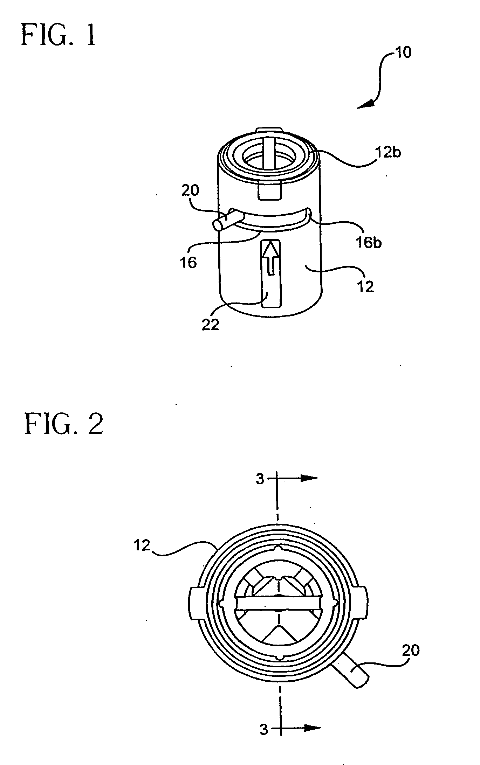

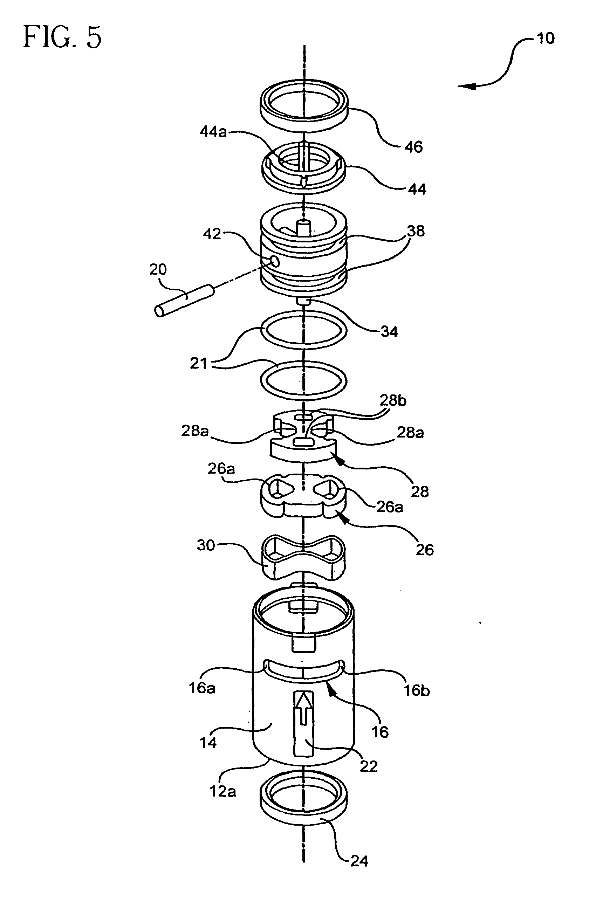

Now referring to the figures; in which like elements have identical reference numbers, an in-line valve cartridge 10 of the present invention is shown. Specifically referring to Figures 1 and 5, cartridge 10 includes a generally cylindrical housing 12 having a proximate extent 12a for support within a housing of a sanitary fitting within which cartridge 12 is disposed, a distal extent 12b from which water leaves cartridge 12 and a longitudinal body 14 extending therebetween. Body 14 has a thickness delineated by an outer peripheral surface and an inner peripheral surface, which inner peripheral surface further defines elongated lumen 18 within body 14. A portion of the inner peripheral surface adjacent proximate extent 12a has protrusions 19 depending outwardly therefrom and defining proximate seats 19a and distal seats 19b therein. Seats 19a and 19b support additional valve element in lumen 18 as described further hereinbelow.

Housing 12 further includes an annular aperture 16 that connects the outer and inner peripheral surfaces of body 14 and accommodates placement of a driving member 20 therethrough. Driving member 20 rotates about the longitudinal axis of housing 12 (coinciding with line A-A shown in Figure 1) and correspondingly achieves translational movement through aperture 16. Aperture 16 has opposing extents 16a and 16b that operate as stops for driving member 20 and help define the open and closed positions of cartridge 10, as described below

Body 14 may also have one or more indicia 22 defined thereon to indicate proper positioning of cartridge 10 in the sanitary fitting and thus also the direction of fluid flow therethrough. An elastomeric inlet seal 24 is disposed adjacent proximate extent 12a of housing 12 to facilitate mounting of cartridge 10 to a support surface and thereby prevent fluid leaks at the mounting connection. Proximate seats 19a accommodate satisfactory frictional securement of inlet seal 24 therewithin, although additional securement options such as epoxies and adhesives may also be used in combination therewith.

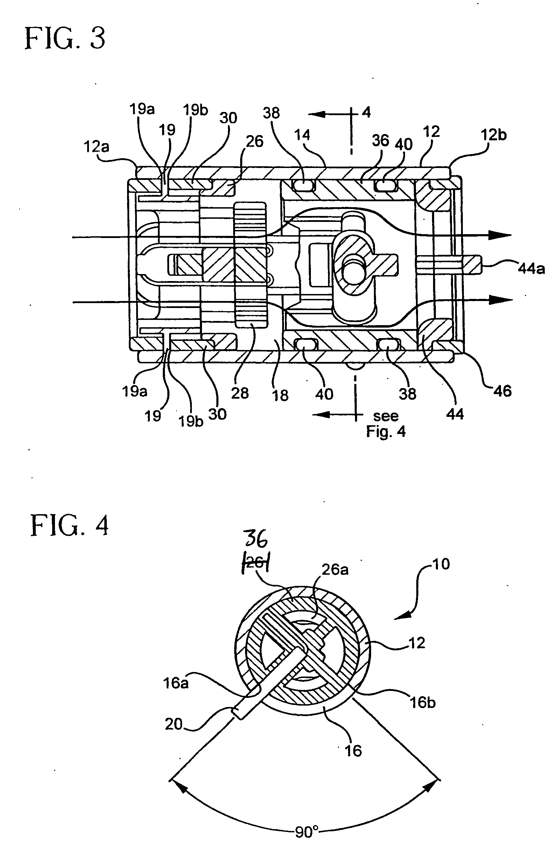

Referring to Figures 3 and 5, each of a stationary ceramic disk 26 and a rotating disk 28 are placed in tandem adjacent a second elastomeric seal 30 that is frictionally secured by distal seats 19b. Stationary disk 26 includes at least one aperture 26a that facilitates through flow of cold water, hot water or a combination thereof. Seal 30 desirably includes at least one complementary aperture therethrough (not shown) corresponding to apertures 26a. Seal 30 and distal seats 19b together secure stationary disk 26 within housing 12 such that stationary disk 26 and seal 30 are functionally integral with the housing yet detachably inserted into complementary grooves in the housing for easy assembly and maintenance. This relative frictional fit achieves integration of seals without welding and without the insertion of additional seals such as O-rings that are used in conventional mixing valves, thereby eliminating undesirable pressure on the stationary disk.

Rotating disk 28 is rotationally disposed relative to stationary disk 26 and includes one or more cut-outs 28a defined therethrough and one or more recesses 28b defined on a distal surface thereof. Cut-outs 28a may assume any geometry that is conducive to the successful operation of cartridge 10. Recesses 28b engage corresponding protrusions 34 that depend downwardly from a proximate extent of a piston 36 such that translational movement of driving member 20 causes rotation of rotating disk 28. In the alternative, a centric spindle may be used in place of piston 36 that allows water to flow therearound and along the inner peripheral surface of body 14 to the water outlet.

Piston 36 includes grooves 38 circumferentially defined therearound that accommodate placement of corresponding O-rings 40 therewithin. Piston 36 also includes aperture 42 for securement of driving member 20 therewithin. Adjacent a distal extent of piston 36, an axial bearing 44 and an elastomeric seal 46 are disposed to facilitate employment of the cartridge 10 in a sanitary fitting. Axial bearing 44 desirably includes a bended rib 44a formed across a radial span thereof. Rib 44a facilitates gripping with pliers or one or more digits for easy disassembly and maintenance of cartridge 10.

In use, cartridge 10 is fixed within an existing sanitary fitting via a plurality of fastening members that are well known in the industry. A user imparts translational movement to driving member 20 through aperture 16, thereby rotating driving member 20 about the longitudinal axis of housing 12. Since recesses 28b readily engage protrusions 34, such translational movement causes rotating disk 28 to revolve. Continuing rotation of rotating disk 28 via translational movement of driving member 20 moves cut-outs 28a relative to apertures 26a of stationary disk 26, thereby adjusting the volume of fluid flow through cartridge 10. The presence of multiple apertures enables any of hot water, cold water or mixed temperature water to flow directly through the center of piston 36 in the path shown in Figure 3 (in the case of mixed temperature applications, a mixing valve is disposed adjacent cartridge 10, which mixing valve is selected from a plurality of mixing valves that are well known in the art and may form part of the preexisting sanitary fitting). The extent of the driving member's movement in aperture 16 is about 90° (as shown in Figure 4). The user is therefore certain when the valve is fully opened or fully closed without requiring additional stop members in the valve construction.

The present invention benefits multiple sanitary applications in that the same valve cartridge may be employed in a single installation having multiple fittings (for example, a faucet, a shower and a handspray). This valve configuration advantageously simplifies the construction of sanitary installations and simultaneously attenuates concerns about performance and temporal and fiscal costs inherent in the installation and maintenance of multiple valve configurations. In addition, the present invention achieves flow through performance in a variety of sanitary fitting designs, thereby permitting selection of a broader range of aesthetic options without compromising the flow through function of the valve. Unlike conventional mixing valves, the present invention accomplishes flow through performance in combination with the relative frictional fit between the seal and the stationary disk, thereby utilizing fully the functional capabilities of the cartridge housing.

Various changes to the foregoing described and shown structures are now evident to those skilled in the art. The matter set forth in the foregoing description and accompanying drawings is therefore offered by way of illustration only and not as a limitation. Accordingly, the particularly disclosed scope of the invention is set forth in the following claims.

## Claims

1. A valve cartridge (10) for use in sanitary fittings, comprising:
a generally cylindrical housing (12) having a proximate extent (12a) for support within a housing of a sanitary fitting within which said cartridge (10) is disposable, a distal extent (12b) from which water leaves said cartridge (10) and a longitudinal body (14) extending there between, said body (14) having a thickness delineated by an outer peripheral surface and an inner peripheral surface, said inner peripheral surface further defining an elongated lumen (18) within said body (14); said housing (12) further including an annular aperture (16) that connects said outer and inner peripheral surfaces of said body (14) and accommodates placement of a driving member (20) therethrough, said driving member (20) rotating about a longitudinal axis of said housing (12) and correspondingly achieving translational movement through said aperture (16), said aperture (16) having opposing extents (16a, 16b) that operate as stops for said driving member (20) and define open and closed positions of said valve cartridge (10);
a rotating disk (28) rotationally disposed relative to a stationary disk (26) wherein said stationary disk (26) has at least one aperture (26a) for through flow of cold water, hot water or a combination thereof; and
protrusions (19) depending outwardly from a portion of said inner peripheral surface adjacent said proximate extent (12a) so as to define proximate seats (19a) and distal seats (19b) therein,
**characterized in that** the valve cartridge (10) includes an elastomeric inlet seal (24) disposed in the proximate seats (19a) adjacent said proximate extent (12a) of said housing (12) to facilitate mounting of said cartridge (10) to a support surface and
said stationary disk (26) and said rotating disk (28) are placed in tandem adjacent a second elastomeric seal (30) that is frictionally secured by said distal seats (19b) such that said second seal (30) and said distal seats (19b) together secure said stationary disk (26) within said housing (12).

2. The valve cartridge of claim 1, **characterized in that** said second seal (30) includes at least one aperture therethrough corresponding to said apertures (26a) of said stationary disk (26).

3. The valve cartridge of claim 1 or 2, **characterized in that** a piston (36) in communication with said driving member (20) is provided such that translational movement of said driving member (20) imparts rotational motion to said rotating disk (28) to effect linear fluid flow through said piston (36).

4. The valve cartridge of claim 3, **characterized in that** said rotating disk (28) includes one or more recesses (28b) defined on a distal surface thereof.

5. The valve cartridge of claim 4, **characterized in that** said one or more recesses (28b) correspondingly engage said at least one protrusion (34) of said piston (36) to effect said rotational movement of said rotating disk (28).

6. The valve cartridge of claim 3, **characterized in that** said piston (36) includes at least one groove (38) circumferentially defined therearound that accommodate placements of at least one corresponding O-ring (40) therewithin.

7. The valve cartridge of claim 3, **characterized in that** said piston (36) includes an aperture (42) for securement of said driving member (20).

8. The valve cartridge of claim 3, **characterized in that** an axial bearing (44) is provided adjacent said distal extent of said piston (36).

9. The valve cartridge of claim 8, **characterized in that** said axial bearing (14) includes at least one bended rib (44a) formed across a radial span thereof so as to facilitate gripping of said valve cartridge.

10. The valve cartridge of claim 9, further including a third elastomeric seal (46) adjacent said axial bearing (44) to facilitate employment of said valve cartridge (10) in a sanitary fitting.

11. The valve cartridge of claim 1, further including a centric spindle in communication with said driving member (20), said centric spindle allowing water to flow therearound and along said inner peripheral surface of said body (14) for egress therefrom. ,

12. The valve cartridge of one of the claims 1-11, **characterized in that** said body (14) includes one or more indicia (22) defined thereon to indicate proper positioning of said cartridge (10) in said sanitary fitting and thus also the direction of fluid flow therethrough.

## Patentansprüche

1. Ventileinsatz (10) zur Verwendung in Sanitärfittings, Folgendes umfassend:
ein allgemein zylindrisches Gehäuse (12) mit einem proximalen Ende (12a), um in einem Gehäuse eines Sanitärfittings gehalten zu werden, in welchem der Einsatz (10) angeordnet werden kann, einem distalen Ende (12b), aus dem Wasser den Einsatz (10) verlässt, und einem längsgerichteten Körper (14), der sich dazwischen erstreckt, wobei der Körper (14) eine Dicke aufweist, die durch eine außen umlaufende Oberfläche und eine innen umlaufende Oberfläche begrenzt wird, wobei die innen umlaufende Oberfläche im Körper (14) ferner einen länglichen Hohlraum (18) in dem Körper (14) definiert, wobei das Gehäuse (12) ferner eine ringförmige Öffnung (16) aufweist, welche die außen umlaufende und die innen umlaufende Oberfläche des Körpers (14) verbindet und der Anordnung eines Antriebselements (20) durch sich hindurch Platz bietet, wobei das Antriebselement (20) um eine Längsachse des Gehäuses (12) rotiert und dementsprechend durch die Öffnung (16) hindurch eine translatorische Bewegung erreicht, wobei die Öffnung (16) zwei sich gegenüberliegende Enden (16a, 16b) aufweist, die als Anschläge für das Antriebselement (20) fungieren und eine geöffnete Position und eine geschlossene Position des Ventileinsatzes (10) definieren,
eine rotierende Scheibe (28), die im Verhältnis zu einer stationären Scheibe (26) rotierbar angeordnet ist, wobei die stationäre Scheibe (26) mindestens eine Öffnung (26a) für den Durchfluss von Kaltwasser, Heißwasser oder einer Mischung daraus aufweist, und Auskragungen (19), die sich von einem Abschnitt der innen umlaufenden Oberfläche angrenzend am proximalen Ende (12a) derart auswärts erstrecken, dass darin proximale Sitze (19a) und distale Sitze (19b) definiert sind,
**dadurch gekennzeichnet, dass** der Ventileinsatz (10) eine elastomere Einlassdichtung (24) aufweist, die in den proximalen Sitzen (19a), angrenzend am proximalen Ende (12a) des Gehäuses (12), angeordnet sind, um die Montage des Einsatzes (10) an einer Halteoberfläche zu erleichtern, und
die stationäre Scheibe (26) und die rotierende Scheibe (28) hintereinander angrenzend an eine zweite elastomere Dichtung (30) angeordnet sind, die durch die distalen Sitze (19b) kraftschlüssig derart befestigt ist, dass die zweite Dichtung (30) und die distalen Sitze (19b) zusammen die stationäre Scheibe (26) im Gehäuse (12) befestigen.

2. Ventileinsatz nach Anspruch 1, **dadurch gekennzeichnet, dass** die zweite Dichtung (30) mindestens eine Öffnung durch sich hindurch aufweist, die den Öffnungen (26a) der stationären Scheibe (26) entspricht.

3. Ventileinsatz nach Anspruch 1 oder 2, **dadurch gekennzeichnet, dass** in Verbindung mit dem Antriebselement (20) ein Kolben (36) derart bereitgestellt ist, dass die translatorische Bewegung des Antriebselements (20) eine Rotationsbewegung auf die rotierende Scheibe (28) überträgt, um einen linearen Fluidfluss durch den Kolben (36) zu bewirken.

4. Ventileinsatz nach Anspruch 3, **dadurch gekennzeichnet, dass** die rotierende Scheibe (28) eine oder mehrere Vertiefungen (28b) aufweist, die auf deren distaler Oberfläche definiert sind.

5. Ventileinsatz nach Anspruch 4, **dadurch gekennzeichnet, dass** die eine oder die mehreren Vertiefungen (28b) jeweils die mindestens eine Auskragung (34) des Kolbens (36) ergreifen, um die Rotationsbewegung der rotierenden Scheibe (28) zu bewirken.

6. Ventileinsatz nach Anspruch 3, **dadurch gekennzeichnet, dass** der Kolben (36) mindestens eine Rille (38) aufweist, die um ihn umlaufend definiert ist und der Anordnung mindestens eines entsprechenden O-Ringes (40) darin Platz bietet.

7. Ventileinsatz nach Anspruch 3, **dadurch gekennzeichnet, dass** der Kolben (36) eine Öffnung (42) zum Befestigen des Antriebselements (20) aufweist.

8. Ventileinsatz nach Anspruch 3, **dadurch gekennzeichnet, dass** angrenzend an das distale Ende des Kolbens (36) ein Axiallager (44) bereitgestellt ist.

9. Ventileinsatz nach Anspruch 8, **dadurch gekennzeichnet, dass** das Axiallager (44) mindestens eine gekrümmte Rippe (44a) aufweist, die über eine radiale Spannweite desselben gebildet ist, sodass das Einspannen des Ventileinsatzes erleichtert wird.

10. Ventileinsatz nach Anspruch 9, ferner angrenzend an das Axiallager (44) eine dritte elastomere Dichtung (46) aufweisend, um den Einsatz des Ventileinsatzes (10) in einem Sanitärfitting zu erleichtern

11. Ventileinsatz nach Anspruch 1, ferner in Verbindung mit dem Antriebselement (20) eine Zentralspindel aufweisend, wobei die Zentralspindel den Wasserfluss um sich herum und entlang der innen umlaufenden Oberfläche des Körpers (14) zum Abfließen daraus ermöglicht.

12. Ventileinsatz nach einem der Ansprüche 1 bis 11, **dadurch gekennzeichnet, dass** der Körper (14) ein oder mehrere Kennzeichen (22) aufweist, die an ihm definiert sind, um die richtige Positionierung des Einsatzes (10) im Sanitärfitting und somit auch die Richtung des Fluidflusses durch ihn hindurch anzuzeigen.

## Revendications

1. Cartouche de vanne (10) destinée à être utilisée pour les raccords sanitaires, comprenant :
un boîtier généralement cylindrique (12) ayant une étendue proximale (12a) pour le support à l'intérieur d'un boîtier d'un raccord sanitaire à l'intérieur duquel ladite cartouche (10) peut être disposée, une étendue distale (12b) à partir de laquelle l'eau sort de ladite cartouche (10) et un corps longitudinal (14) s'étendant entre elles, ledit corps (14) ayant une épaisseur définie par une surface périphérique externe et une surface périphérique interne, ladite surface périphérique interne définissant en outre une lumière allongée (18) à l'intérieur dudit corps (14) ; ledit boîtier (12) comprenant en outre une ouverture annulaire (16) qui raccorde lesdites surfaces périphériques externe et interne dudit corps (14) et permet la mise en place d'un élément d'entraînement (20) à travers ce dernier, ledit élément d'entraînement (20) tournant autour d'un axe longitudinal dudit boîtier (12) et obtenant de manière correspondante, le mouvement de translation à travers ladite ouverture (16), ladite ouverture (16) ayant des étendues opposées (16a, 16b) qui fonctionnent en tant que butées pour ledit élément d'entraînement (20) et définissent des positions ouverte et fermée de ladite cartouche de vanne (10) ;
un disque rotatif (28) disposé de manière rotative par rapport à un disque fixe (26), dans laquelle ledit disque fixe (26) a au moins une ouverture (26a) pour l'écoulement d'eau froide, d'eau chaude et leur combinaison ; et
des saillies (19) dépendant vers l'extérieur d'une partie de ladite surface périphérique interne adjacente à ladite étendue proximale (12a) afin de définir des sièges proximaux (19a) et des sièges distaux (19b) à l'intérieur de cette dernière,
**caractérisée en ce que** la cartouche de vanne (10) comprend un joint d'étanchéité d'entrée élastomère (24) disposé dans les sièges proximaux (19a) de manière adjacente à ladite étendue proximale (12a) dudit boîtier (12) afin de faciliter le montage de ladite cartouche (10) sur une surface de support, et
ledit disque fixe (26) et ledit disque rotatif (28) sont placés en tandem, de manière adjacente à un deuxième joint d'étanchéité élastomère (30) qui est fixé par friction par lesdits sièges distaux (19b) de sorte que ledit deuxième joint d'étanchéité (30) et lesdits sièges distaux (19b) fixent ensemble ledit disque fixe (26) à l'intérieur dudit boîtier (12).

2. Cartouche de vanne selon la revendication 1, **caractérisée en ce que** le deuxième joint d'étanchéité (30) comprend au moins une ouverture à travers ce dernier correspondant auxdites ouvertures (26a) dudit disque fixe (26).

3. Cartouche de vanne selon la revendication 1 ou 2, **caractérisée en ce que** l'on prévoit un piston (36) en communication avec ledit élément d'entraînement (20), de sorte que le mouvement de translation dudit élément d'entraînement (20) communique le mouvement de rotation audit disque rotatif (28) afin d'effectuer un écoulement de fluide linéaire à travers ledit piston (36).

4. Cartouche de vanne selon la revendication 3, **caractérisée en ce que** ledit disque rotatif (28) comprend un ou plusieurs évidements (28b) définis sur sa surface distale.

5. Cartouche de vanne selon la revendication 4, **caractérisée en ce que** lesdits un ou plusieurs évidements (28b) mettent en prise de manière correspondante ladite au moins une saillie (34) dudit piston (36) pour réaliser ledit mouvement de rotation dudit disque rotatif (28).

6. Cartouche de vanne selon la revendication 3, **caractérisée en ce que** ledit piston (36) comprend au moins une rainure (38) définie de manière circonférentielle autour de ce dernier, qui loge des emplacements d'au moins un joint torique (40) correspondant à l'intérieur de cette dernière.

7. Cartouche de vanne selon la revendication 3, **caractérisée en ce que** ledit piston (36) comprend une ouverture (42) pour la fixation dudit élément d'entraînement (20).

8. Cartouche de vanne selon la revendication 3, **caractérisé en ce qu'**un palier axial (44) est prévu de manière adjacente à ladite extrémité distale dudit piston (36).

9. Cartouche de vanne selon la revendication 8, **caractérisée en ce que** ledit palier axial (44) comprend au moins une nervure pliée (44a) formée sur sa portée radiale afin de faciliter la saisie de ladite cartouche de vanne.

10. Cartouche de vanne selon la revendication 9, comprenant en outre un troisième joint d'étanchéité élastomère (46) adjacent audit palier axial (44) afin de faciliter l'utilisation de ladite cartouche de vanne (10) dans un raccord sanitaire.

11. Cartouche de vanne selon la revendication 1, comprenant en outre un axe central en communication avec ledit élément d'entraînement (20), ledit axe central permettant à l'eau de s'écouler autour de ce dernier et le long de ladite surface périphérique interne dudit corps (14) pour la sortie de ce dernier.

12. Cartouche de vanne selon l'une quelconque des revendications 1 à 11, **caractérisée en ce que** ledit corps (14) comprend un ou plusieurs indices (22) définis sur ce dernier afin d'indiquer le bon positionnement de ladite cartouche (10) dans ledit raccord sanitaire et ainsi également la direction de l'écoulement de fluide à travers cette dernière.
